# FASCICULE DE BREVET EUROPEEN

(11) **EP 0 479 655 B1**
(45) Date de publication et mention de la délivrance du brevet: **14.07.1993**
(21) Numéro de dépôt: 91402583.8
(22) Date de dépôt: 27.09.1991
(51) Int. Cl.: G06K 19/06, G07F 7/12, G07F 7/10

(54) **Circuit intégré pour une carte à microprocesseur conçue pour recevoir des programmes multiples en mémoire programmable**
Integrierte Schaltung für eine Mikroprozessor-Karte mit mehreren Programmen in programmierbarem Speicher
Integrated circuit for a microprocessor-card with multiple programms in programmable memory

(30) Priorité: 02.10.1990 FR 9012115
(43) Date de publication de la demande: 08.04.1992
(73) Titulaire: GEMPLUS CARD INTERNATIONAL S.A., F-13420 Gémenos (FR)
(72) Inventeur: Geronimi, François, Cabinet BALLOT-SCHMIT, F-75116 Paris (FR)
(74) Mandataire: Schmit, Christian Norbert Marie

(56) Documents cités:
- PATENT ABSTRACTS OF JAPAN vol. 7, no. 152 (P-208)(1297) 5 Juillet 1983 & JP-A-58 062 749
- PATENT ABSTRACTS OF JAPAN vol. 7, no. 75 (P-187)(1220) 29 Mars 1983 & JP-A-58 005 848

## Description

L'invention concerne les circuits intégrés pour les cartes à puces, et plus spécialement les cartes dont la puce de circuit intégré comporte non seulement un microprocesseur et une mémoire morte de programme (intangible) mais aussi une mémoire électriquement programmable susceptible de stocker non seulement des données mais aussi du code exécutable par le microprocesseur.

Ces cartes à mémoire sont intéressantes notamment dans des applications comportant une hiérarchie de plusieurs fonctionnalités possibles : par exemple, le fabricant de la puce de circuit intégré établit des programmes de fonctionnement du microprocesseur à un premier niveau de fonctionnalité ; notamment il établit tous les programmes de la mémoire morte qui sont définitivement figés ; le fabricant de cartes à puces qui incorpore le circuit intégré à sa carte va établir une deuxième fonctionnalité; le client institutionnel de la carte (banque, fournisseur de services, etc.) va établir une troisième fonctionnalité, et l'utilisateur final (client du fournisseur de service) va enfin pouvoir utiliser une quatrième fonctionnalité. Cette hiérarchie théorique est donnée simplement à titre d'exemple.

On a trouvé selon l'invention un moyen particulièrement simple de permettre d'avoir plusieurs fonctionnalités différentes, accessibles à des niveaux d'utilisation différents.

Selon l'invention, il est prévu que le circuit intégré comprend, outre un microprocesseur et une mémoire morte, une mémoire électriquement programmable susceptible de contenir du code exécutable par le microprocesseur, avec de plus :
- dans la mémoire morte plusieurs instructions dites de filtrage exécutables par le microprocesseur pour lire le contenu placé à une première adresse spécifiée de la mémoire programmable électriquement, adresse dite "adresse de filtre",
- des moyens pour vérifier si le contenu placé à l'adresse de filtre représente une adresse de la mémoire électriquement programmable située dans des limites prédéterminées, cette adresse étant appelée "adresse de sous programme",
- des moyens pour faire exécuter au microprocesseur un sous programme d'instructions contenu en mémoire programmable électriquement à partir de cette adresse de sous programme, à condition que cette adresse se situe dans les limites prescrites, et des moyens pour continuer le programme de la mémoire morte dans le cas contraire, ce dernier programme contenant plusieurs instructions successives de filtrage correspondant chacune à une adresse de filtre respective différente dans la mémoire électriquement programmable et à des limites d'adresse de sous programme différentes pour chaque instruction de filtrage.

L'invention propose donc une organisation générale des mémoires de la puce permettant de contrôler à volonté et de manière très simple la mise en place de plusieurs applications à des niveaux différents.

D'autres caractéristiques et avantages de l'invention apparaîtront à la lecture de la description détaillée qui suit et qui est faite en référence aux dessins annexés dans lesquels :
- la figure 1 représente très schématiquement l'organisation générale d'une puce de circuit intégré d'une carte à puce à microprocesseur;
- la figure 2 représente l'organisation de la mémoire dans une puce de circuit intégré selon l'invention.

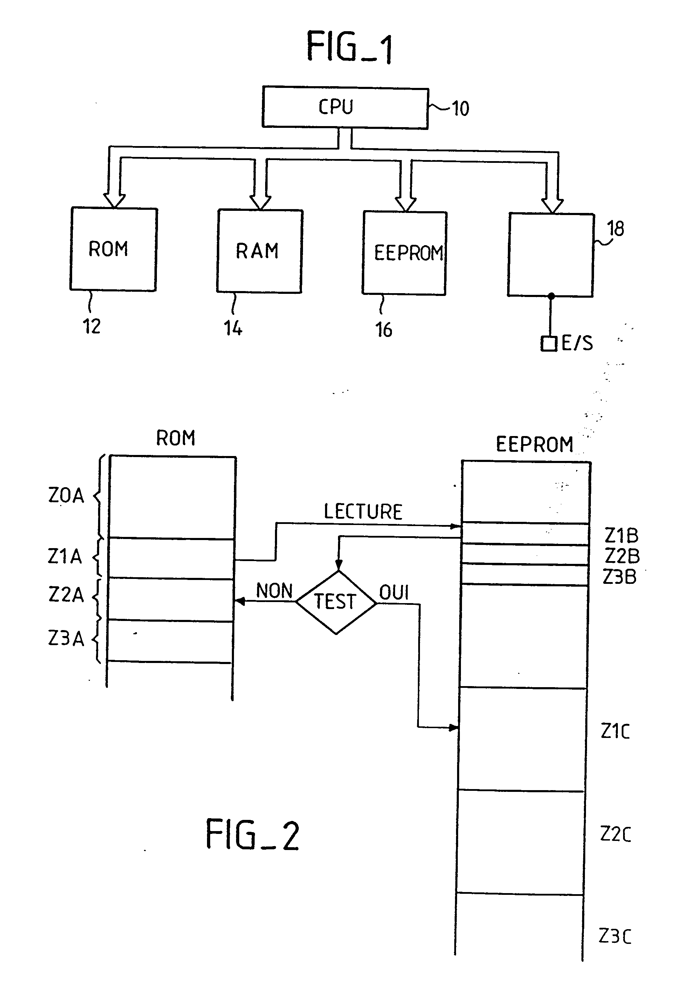

Une puce de circuit intégré classique de carte à mémoire à microprocesseur est représentée à la figure 1. Elle comprend d'abord une unité centrale de traitement 10 (CPU, de l'anglais "Central Processing Unit"), et toutes les ressources périphériques associées :
- une mémoire morte 12 (ROM) contenant des instructions exécutables par le microprocesseur, et notamment les programmes de gestion des mémoires et de la sécurité d'accès à la carte ;
- une mémoire vive de travail 14 (RAM) ;
- une mémoire électriquement programmable 16, EPROM (effaçable par ultra violets) ou, mieux encore, (FLASH EPROM ou EEPROM effaçable électriquement) ; cette mémoire peut comprendre non seulement des données mais aussi du code exécutable (instructions exécutables par le microprocesseur) ;
- des ports d'entrée-sortie 18 permettant des échanges avec l'extérieur de la carte, en principe par l'intermédiaire d'un très petit nombre de plots d'entrée-sortie E/S.

L'invention s'intéresse spécialement au cas où des programmes d'application hiérarchisés doivent pouvoir être exécutés par le microprocesseur : un programme de niveau hiérarchique supérieur doit obligatoirement être exécuté avant un programme de niveau hiérarchique suivant.

On prévoit selon l'invention que le circuit intégré et ses mémoires ROM et EPROM ou EEPROM sont organisés de la manière suivante : tout d'abord, c'est la mémoire morte qui gère les autorisations d'accès à la mémoire EEPROM, en lecture comme en écriture. Ensuite, des zones de la mémoire EEPROM, à des adresses qu'on appellera "adresses de filtrage" sont réservées pour contenir d'autres adresses qu'on appellera "adresses de sous programmes". Enfin, la mémoire EEPROM contient, à partir d'une adresse de sous programme, un sous programme exécutable par le microprocesseur. C'est ce sous programme dont l'utilisation est contrôlée selon l'invention.

La figure 2 représente cette organisation. La mémoire ROM contient du code exécutable séquentiellement sous la commande d'un compteur (non représenté), c'est-à-dire que les instructions sont exécutées successivement dans l'ordre des adresses successives de la mémoire (sauf branchements et sauts divers). Une zone Z0A de la mémoire ROM contient par exemple un programme d'initialisation de la carte (tests divers, vérifications de sécurité, remise à zéro de registres, etc.), exécuté en début d'utilisation.

A la suite de la zone Z0A, une zone Z1A contient une instruction de filtrage permettant de vérifier la présence (et la possibilité d'utilisation) d'un premier sous programme dans la mémoire EEPROM. L'instruction de filtrage est un petit sous programme exécutable par le microprocesseur et définissant des moyens pour :
- aller lire dans la mémoire EEPROM un contenu à une adresse spécifiée (adresse d'une zone Z1B de la mémoire EEPROM); cette adresse est figée puisque c'est la mémoire morte qui la définit ;
- vérifier que le contenu à l'adresse Z1B est une adresse de la mémoire EEPROM, cette adresse étant contenue entre des limites spécifiées qui englobent notamment une zone Z1C de la mémoire EEPROM ;
- si c'est le cas, aller à l'adresse spécifiée ; sinon aller à l'adresse suivante Z2A de la mémoire ROM. A l'adresse spécifiée, c'est le sous programme présent dans la zone Z1C de la mémoire EEPROM qui sera exécuté.

Plusieurs instructions de filtrage successives sont ainsi contenues à des zones successives de la mémoire ROM. Elles correspondent chacune à un sous programme d'application respectif de la mémoire EEPROM.

Dans l'exemple représenté, il y a par exemple trois instructions de filtrage successives dans la mémoire ROM, à des zones successives Z1A, Z2A, Z3A de cette mémoire.

L'instruction de la zone Z1A réfère à une adresse de filtrage Z1B de la mémoire EEPROM et cette instruction contient les limites a priori figées (en mémoire morte) entre lesquelles doit se situer le contenu de la zone Z1B pour que le sous programme correspondant à cette instruction de filtrage soit exécuté. Ce sous programme est contenu dans la zone Z1C.

De même, l'instruction de filtrage Z2A correspondant au programme de niveau hiérarchique suivant (qui ne sera exécuté qu'après exécution du sous programme de la zone Z1C ou après résultat négatif du premier filtrage) commande la lecture d'une zone Z2B différente de la zone Z1B. Le sous programme correspondant à cette instruction est stocké en zone Z2C; mais le microprocesseur n'exécutera le programme de la zone Z2C que si le contenu de l'adresse Z2B est une adresse se situant entre des limites prédéterminées figées dans la mémoire ROM. Ces limites ne sont pas les mêmes que pour l'instruction de filtrage de la zone Z1A, de sorte que des blocs sont réservés dans la mémoire EEPROM, grâce aux données figées dans la mémoire ROM, chaque bloc correspondant à un niveau hiérarchique de filtrage déterminé (dans l'ordre d'exécution des instructions de filtrage de la mémoire ROM).

Enfin, l'instruction de filtrage de la zone Z3A définit encore d'autres valeurs limites, donc un autre bloc dans lequel doit se situer le sous programme de troisième niveau, à savoir dans une zone Z3C de la mémoire EEPROM. Le test sera là encore positif ou négatif selon le contenu qu'on aura stocké en mémoire EEPROM à l'adresse Z3B.

Lors de la préparation d'une carte à puce en vue de plusieurs applications possibles, les programmes correspondants seront stockés dans les zones Z1C, Z2C, Z3C de la mémoire EEPROM.

Lorsque la décision de permettre l'utilisation de tel ou tel sous programme sera prise, il n'y aura plus qu'à stocker dans la mémoire EEPROM, dans les zones Z1B, Z2B, Z3B, des valeurs d'adresse correspondant au début des zones contenant les sous programmes d'application qui doivent être effectivement mis en service. Pour ceux qui ne doivent pas l'être, on stockera dans les zones d'adresses de sous programme Z1B, Z2B ou Z3B des valeurs nulles ou des valeurs invalides, c'est-à-dire qui ne correspondent en tout cas pas à des branchements possibles vers les sous programmes non autorisés.

L'accès aux zones Z1B, Z2B, Z3B peut être réservé (gestion de sécurité d'accès par la mémoire ROM) selon une hiérarchie d'accès, par codes confidentiels notamment. De cette manière ces zones ne sont en principe plus modifiables par les utilisateurs de niveau inférieur dans la hiérarchie d'accès.

On a ainsi décrit une organisation de circuit intégré qui permet de prévoir à l'avance que des fonctionnalités successives supplémentaires, hiérarchisées, peuvent être ajoutées aux fonctionnalités définies par la mémoire morte, le contrôle de la mise en oeuvre de ces fonctionnalités supplémentaires étant très simple puisqu'il passe par la simple inscription d'une adresse valide dans la mémoire EEPROM à une adresse elle-même spécifiée.

## Revendications

1. Circuit intégré comprenant un microprocesseur (10), une mémoire morte de programme (12), et une mémoire électriquement programmable (16) susceptible de contenir des instructions exécutables par le microprocesseur, caractérisé en ce qu'il comporte en outre :
- dans la mémoire morte, plusieurs instructions dites de filtrage exécutables par le microprocesseur pour lire le contenu placé à une première adresse spécifiée (Z1B Z2B, Z3B) de la mémoire programmable électriquement, adresse dite "adresse de filtre",
- des moyens pour vérifier si le contenu placé à l'adresse de filtre représente une adresse de la mémoire électriquement programmable située dans des limites prédéterminées fixées en mémoire morte, cette adresse étant appelée "adresse de sous programme",
- des moyens pour faire exécuter au microprocesseur un sous programme d'instructions contenu en mémoire programmable électriquement à partir de cette adresse de sous programme, à condition que cette adresse se situe dans les limites prescrites, et des moyens pour continuer le programme de la mémoire morte dans le cas contraire, ce dernier programme contenant plusieurs instructions successives de filtrage correspondant chacune à une adresse de filtre respective différente dans la mémoire électriquement programmable et à des limites d'adresse de sous programme différentes pour chaque instruction de filtrage.

## Patentansprüche

1. Integrierte Schaltung mit einem Mikroprozessor (10), einem Programm-Festwertspeicher (12) und einem elektrisch programmierbaren Speicher (16), der von dem Mikroprozessor ausführbare Befehle enthalten kann, dadurch gekennzeichnet, daß sie außerdem enthält:
- in dem Festwertspeicher mehrere Filterungsbefehle genannte Befehle, die von dem Mikroprozessor ausführbar sind, um den an einer ersten spezifizierten Adresse (Z1B, Z2B, Z3B) des elektrisch programmierbaren Speichers liegenden Inhalt zu lesen, wobei diese Adresse "Filteradresse" genannt wird,
- Mittel zum Verifizieren, ob der an der Filteradresse liegende Inhalt eine Adresse des elektrisch programmierbaren Speichers darstellt, die in vorbestimmten, im Festwertspeicher festgelegten Grenzen liegt, wobei diese Adresse "Unterprogrammadresse" genannt wird,
- Mittel, um durch den Mikroprozessor ein Befehlsunterprogramm ausführen zu lassen, das im elektrisch programmierbaren Speicher von dieser Unterprogrammadresse an enthalten ist, vorausgesetzt, daß diese Adresse in den vorgeschriebenen Grenzen liegt, und Mittel, um im entgegengesetzten Fall das Programm des Festwertspeichers fortzusetzen, wobei dieses letztere Programm mehrere aufeinanderfolgende Filterungsbefehle enthält, von denen jeder einer jeweils anderen Filteradresse in dem elektrisch programmierbaren Speicher und anderen Grenzen von Unterprogrammadressen für jeden Filterungsbefehl entspricht.

## Claims

1. Integrator circuit comprising a microprocessor (10), a dead program memory (12) and an electrically programmable memory (16) capable of containing instructions executable by the microprocessor, characterized in that it comprises in addition:
- in the dead memory, a number of instructions termed filtering instructions executable by the microprocessor to read the contents placed at a first specified address (Z1B, Z2B, Z3B) of the electrically programmable memory, the address known as "filter address",
- means for verifying whether the contents placed at the filter address represents an address of the electrically programmable memory situated within predetermined limits fixed in the dead memory, this address being termed "sub-program address",
- means for causing the microprocessor to execute a sub-program of instructions, which is contained in the electrically programmable memory, from this sub-program address, on condition that this address is situated within the prescribed limits and means for continuing the program of the dead memory if that is not the case, this latter program containing a number of successive filtering instructions each corresponding to a different respective filter address in the electrically programmable memory and to different sub-program address limits for each filtering instruction.
